# EUROPÄISCHE PATENTSCHRIFT

(11) **EP 2 961 999 B1**
(45) Veröffentlichungstag und Bekanntmachung des Hinweises auf die Patenterteilung: **04.07.2018**
(21) Anmeldenummer: 14704162.8
(22) Anmeldetag: 13.02.2014
(51) Int. Cl.: F16B 12/26

(54) **VERBINDUNGSMITTEL**
CONNECTING MEANS
MOYEN DE LIAISON

(30) Priorität: 27.02.2013 DE 102013203289
(43) Veröffentlichungstag der Anmeldung: 06.01.2016
(60) Teilanmeldung: 18173912.9
(73) Patentinhaber: Baur, Franz, 87534 Oberstaufen (DE); Haser, Franz, 87534 Oberstaufen (DE); Lamello AG, 4416 Bubendorf (CH)
(72) Erfinder: BAUR, Franz, 87534 Oberstaufen (DE); HASER, Franz, 87534 Oberstaufen (DE); SEILER, Philipp, CH-4424 Arboldswil (CH); JEKER, Patrick, CH-4225 Brislach (CH)
(74) Vertreter: Hoeger, Stellrecht & Partner Patentanwälte mbB
(86) Internationale Anmeldenummer: PCT/EP2014/052832
(87) Internationale Veröffentlichungsnummer: WO 2014/131626

(56) Entgegenhaltungen:
- EP-A1- 0 058 220
- CH-A5- 696 889
- DE-A1-102011 102 051

## Beschreibung

Die vorliegende Erfindung betrifft ein Verbindungsmittel zum Verbinden eines ersten Bauteils und eines zweiten Bauteils, insbesondere zum Verbinden von Möbel- oder Maschinenteilen.

Ein solches Verbindungsmittel ist beispielsweise aus der EP 1 990 549 A1 bekannt.

Die DE 10 2011 102 051 A1, die EP 0 058 220 A1 und die CH 696 889 A5 offenbaren verschiedene Varianten von Verbindungsmitteln zum Verbinden von Bauteilen.

Der vorliegenden Erfindung liegt die Aufgabe zugrunde, ein Verbindungsmittel zum Verbinden eines ersten Bauteils und eines zweiten Bauteils bereitzustellen, mittels welchem die Bauteile einfach und zuverlässig miteinander verbunden werden können.

Diese Aufgabe wird erfindungsgemäß durch ein Verbindungsmittel gemäß Anspruch 1 gelöst.

Dadurch, dass bei dem erfindungsgemäßen Verbindungsmittel ein Federelement vorgesehen ist, welches mit einem Aufnahmeelement in Eingriff bringbar ist, können die zwei Bauteile mittels des Verbindungsmittels einfach miteinander verbunden, insbesondere verrastet, werden.

Nachfolgend werden die Verstärkungselemente in Verbindung mit dem ersten Verbindungselement beschrieben. Es kann jedoch ergänzend hierzu auch vorgesehen sein, dass das zweite Verbindungselement ein Verstärkungselement oder mehrere Verstärkungselemente umfasst, welche dann vorzugsweise einzelne oder mehrere der im Zusammenhang mit den Verstärkungselementen des ersten Verbindungselements beschriebenen Merkmale und/oder Vorteile aufweisen. Unter einem Federelement ist in dieser Beschreibung und den beigefügten Ansprüchen insbesondere ein elastisches Element zu verstehen, welches mit einem Ende beispielsweise an einem Grundkörper angeordnet ist, so dass das andere Ende relativ zu dem Grundkörper beweglich ist. Eine Federwirkung, insbesondere eine Federkraft, des Federelements resultiert vorzugsweise aus einer Biegung des Federelements.

Vorzugsweise umfasst das Verbindungsmittel, insbesondere das erste Verbindungselement, mehrere Federelemente und/oder mehrere Verstärkungselemente.

Ferner kann vorgesehen sein, dass das Verbindungsmittel, insbesondere das zweite Verbindungselement, mehrere Aufnahmeelemente umfasst.

Unter einem Hilfsfederelement ist in dieser Beschreibung und den beigefügten Ansprüchen insbesondere ein Federelement zu verstehen, welches nur indirekt, nämlich mittels des Federelements, welches mit dem Aufnahmeelement in Eingriff bringbar ist, auf das Aufnahmeelement einwirkt.

Das Federelement, welches mit dem Aufnahmeelement unmittelbar in Eingriff bringbar ist, ist vorzugsweise ein Hauptfederelement.

Günstig kann es sein, wenn das mindestens eine Hilfsfederelement in einem getrennten Zustand der Verbindungselemente beabstandet von dem Federelement, insbesondere dem Hauptfederelement, angeordnet ist.

Insbesondere kann vorgesehen sein, dass die äußere Form des mindestens einen Hilfsfederelements zumindest näherungsweise der äußeren Form des Federelements, insbesondere des Hauptfederelements, entspricht, das mindestens eine Hilfsfederelement jedoch geringere Ausmaße aufweist als das Federelement, insbesondere das Hauptfederelement.

Bei einer Ausgestaltung der Erfindung kann vorgesehen sein, dass das mindestens eine Hilfsfederelement einen Anlageabschnitt umfasst, mittels welchem das Hilfsfederelement zum Verstärken der Federkraft des Federelements an dem Federelement anlegbar ist.

Der Anlageabschnitt ist insbesondere an einem Ende des Hilfsfederelements angeordnet, welches dem Ende, an dem das Hilfsfederelement beispielsweise an einem Grundkörper des Verbindungselements angeordnet ist, gegenüberliegt.

Günstig kann es sein, wenn das Aufnahmeelement einen Aufnahmevorsprung und/oder eine Aufnahmevertiefung umfasst.

Im verbundenen Zustand hintergreift vorzugsweise ein Eingriffsabschnitt des Federelements das Aufnahmeelement im Bereich des Aufnahmevorsprungs und/oder der Aufnahmevertiefung.

Bei einer Ausgestaltung der Erfindung kann vorgesehen sein, dass das Aufnahmeelement einen Spannabschnitt umfasst, längs welchem ein Eingriffsabschnitt des Federelements zum Herstellen der Verbindung zwischen dem ersten Bauteil und dem zweiten Bauteil bewegbar ist, wobei das Federelement hierdurch gespannt wird.

Eine Bewegung der Bauteile, insbesondere der Verbindungselemente, relativ zueinander erfolgt dabei vorzugsweise längs einer Verbindungsrichtung. Die Verbindungsrichtung ist im Wesentlichen senkrecht zu einer Verbindungsebene, in welcher die Bauteile und/oder die Verbindungselemente im verbundenen Zustand aneinander anliegen.

Vorteilhaft kann es sein, wenn der Spannabschnitt des Aufnahmeelements - in einer parallel zur Verbindungsrichtung verlaufenden Einschubrichtung gesehen - einen zunächst steileren Abschnitt und einen sich daran anschließenden flacheren Abschnitt umfasst, beispielsweise einen im Wesentlichen parabelförmigen Querschnitt aufweist. Der Querschnitt ist dabei insbesondere in einer Ebene genommen, welche durch eine Auslenkrichtung des Eingriffsabschnitts des Federelements und die Verbindungsrichtung zwischen den zwei Bauteilen aufgespannt wird.

Die Parabelform des Querschnitts ergibt sich dabei insbesondere dann, wenn die Verbindungsrichtung eine y-Achse ist und die zugehörige x-Achse in der Verbindungsebene, insbesondere im Wesentlichen parallel zur Auslenkrichtung des Eingriffsabschnitts, verläuft.

Vorzugsweise kann mittels des Spannabschnitts des Aufnahmeelements eine Kraftentfaltung des Federelements beim Verbinden der Verbindungselemente miteinander derart erzielt werden, dass das Federelement eingangs zunächst zügiger und anschließend langsamer ausgelenkt wird. Hierdurch kann erreicht werden, dass eine Maximalkraft zum Zusammenpressen (Verbinden) der Verbindungselemente möglichst gering ist und dennoch eine hohe Haltekraft zum Zusammenhalten der Verbindungselemente erhalten werden kann.

Vorteilhaft kann es sein, wenn das Aufnahmeelement zumindest abschnittsweise elastisch ausgebildet ist.

Insbesondere kann vorgesehen sein, dass das Aufnahmeelement zumindest abschnittsweise in und/oder entgegen einer Auslenkrichtung des Eingriffsabschnitts des Federelements nachgiebig ausgebildet ist.

Das Aufnahmeelement ist vorzugsweise an einem dem ersten Verbindungselement zugewandten Ende des Aufnahmeelements mit einem Grundkörper des zweiten Verbindungselements verbunden.

Vorzugsweise ist mindestens ein dem ersten Verbindungselement abgewandtes Ende des Aufnahmeelements bewegbar ausgebildet.

Bei einer Ausgestaltung der Erfindung ist vorgesehen, dass das erste Verbindungselement mindestens zwei Federelemente umfasst, welche das Aufnahmeelement im verbundenen Zustand beidseitig umgreifen.

Vorzugsweise ist jedem Federelement, insbesondere jedem Hauptfederelement, mindestens ein Hilfsfederelement zugeordnet.

Es kann vorgesehen sein, dass das Aufnahmeelement bezüglich einer senkrecht zu einer Verbindungsebene des Verbindungsmittels verlaufenden Quermittelebene des Aufnahmeelements symmetrisch ausgebildet ist. Insbesondere dann, wenn das erste Verbindungselement mindestens zwei Federelemente umfasst, welche das Aufnahmeelement im verbundenen Zustand beidseitig umgreifen, kann dann vorgesehen sein, dass die mindestens zwei das Aufnahmeelement im verbundenen Zustand umgreifenden Federelemente gleichmäßig spannbar, insbesondere die Eingriffsabschnitte der Federelemente gleichmäßig voneinander entfernbar, sind.

Vorteilhaft kann es sein, wenn das erste Verbindungselement mindestens zwei Federelemente und mindestens vier Verstärkungselemente umfasst, wobei die mindestens zwei Federelemente und die mindestens vier Verstärkungselemente bezüglich einer senkrecht zu einer Verbindungsebene des Verbindungsmittels verlaufenden Quermittelebene des ersten Verbindungselements symmetrisch zueinander an dem ersten Verbindungselement angeordnet und/oder symmetrisch zueinander ausgebildet sind. Auch hierdurch kann ein gleichmäßiges Spannen der Federelemente zur zuverlässigen Verbindung der Verbindungselemente miteinander bewirkt werden.

Die mindestens zwei Federelemente und die mindestens vier Verstärkungselemente sind insbesondere an dem Grundkörper angeordnet, insbesondere einstückig mit dem Grundkörper ausgebildet oder stoffschlüssig mit dem Grundkörper verbunden.

Günstig kann es sein, wenn mindestens ein Verbindungselement einen im Wesentlichen kreiszylindersegmentförmigen oder kreiszylinderabschnittsförmigen Grundkörper und mindestens einen im Wesentlichen kreisbogenförmigen Haltevorsprung umfasst, mittels welchem das mindestens eine Verbindungselement in dem Bauteil festlegbar ist.

Ferner kann das erfindungsgemäße Verbindungsmittel einzelne oder mehrere der nachfolgend beschriebenen Merkmale und/oder Vorteile aufweisen:
Mindestens eines der Verbindungselemente umfasst eine gekrümmte Anlagefläche, die in einem Längsschnitt kreisbogenförmig ist.

Günstig kann es sein, wenn das erste Verbindungselement und das zweite Verbindungselement im verbundenen Zustand der Bauteile lösbar miteinander verbunden sind.

Vorzugsweise sind die Verbindungselemente durch reversible Verformung des mindestens einen Federelements und durch reversible Verformung der mindestens zwei Verstärkungselemente von dem getrennten Zustand in den verbundenen Zustand und/oder von dem verbundenen Zustand in den getrennten Zustand bringbar.

Insbesondere dann, wenn mindestens eines der Verbindungselemente eine gekrümmte Anlagefläche umfasst, die in einem Längsschnitt kreisbogenförmig ist, kann diese Anlagefläche an einer ebenfalls im Längsschnitt kreisbogenförmigen Nutgrundfläche einer an einem der Bauteile vorgesehenen Nut abgleiten, wodurch die Ausrichtung des betreffenden Verbindungselements relativ zu dem jeweils anderen Verbindungselement innerhalb gewisser Grenzen bei der Verbindung der Verbindungselemente verändert werden kann, um Lagetoleranzen der Nuten, in denen die Verbindungselemente angeordnet sind, und/oder Herstellungstoleranzen der Verbindungselemente auszugleichen.

Durch diesen zusätzlichen Bewegungsfreiheitsgrad sind beim Zusammenbau der beiden Bauteile noch Korrekturen bezüglich der gegenseitigen Positionen möglich, was die Ansprüche an die Präzision bezüglich der Lage der Nuten in den Bauteilen deutlich reduziert und zu einer erheblichen Erleichterung für den Anwender führt.

Die Verbindungselemente des erfindungsgemäßen Verbindungsmittels werden vorzugsweise in an den Bauteilen bereits vorhandene Nuten eingebracht, so dass kein hoher Kraftaufwand zum Einbringen der Verbindungselemente in die Bauteile erforderlich ist und daher keine Gefahr einer Beschädigung dieser Bauteile besteht.

Bei einer bevorzugten Ausgestaltung der Erfindung ist eine im Wesentlichen ebene Anlegefläche des ersten Verbindungselements an eine ebenfalls im Wesentlichen ebene Anlegefläche des zweiten Verbindungselements anlegbar.

Die im Wesentlichen ebene Anlegefläche des ersten Verbindungselements und/oder des zweiten Verbindungselements ist vorzugsweise im verbundenen Zustand der Bauteile im Wesentlichen parallel zu Kontaktflächen der Bauteile, an welchen die Bauteile aneinander anliegen, ausgerichtet.

Ferner sind im verbundenen Zustand der Bauteile die gekrümmte Anlagefläche und die im Wesentlichen ebene Anlegefläche des ersten Verbindungselements und/oder des zweiten Verbindungselements im Wesentlichen senkrecht zur Verbindungsrichtung ausgerichtet.

Eine gekrümmte Anlagefläche mindestens eines Verbindungselements kann insbesondere im Wesentlichen kreiszylindermantelausschnittsförmig ausgebildet sein.

Insbesondere um mittels der Verbindung zwischen den Verbindungselementen auch Scherkräfte abtragen zu können, kann es von Vorteil sein, wenn mindestens eines der Verbindungselemente mindestens einen Einsteckvorsprung und das jeweils andere Verbindungselement mindestens eine den Einsteckvorsprung im verbundenen Zustand der Bauteile aufnehmende Aufnahmetasche umfasst. Hierdurch kann auf zusätzliche Dübel, wie sie bei den meisten anderen Verbindungsmitteln erforderlich sind, verzichtet werden.

Wenn mindestens eine Aufnahmetasche in einer Längsrichtung des Verbindungsmittels eine größere Ausdehnung aufweist als der darin aufgenommene Einsteckvorsprung, so bietet dies den Vorteil, dass sich das erste Verbindungselement und das zweite Verbindungselement in der Längsrichtung gegeneinander verschieben lassen, um auf diese Weise einen Toleranzausgleich der Verbindung zwischen den Bauteilen zu ermöglichen.

Um eine besonders wirksame Verankerung mindestens eines der Verbindungselemente in dem zugehörigen Bauteil zu erreichen, kann vorgesehen sein, dass mindestens eines der Verbindungselemente mit mindestens einem Haltevorsprung versehen ist, der eine gekrümmte Abstützfläche aufweist, welche in einem Längsschnitt kreisbogenförmig ist.

Mit dieser gekrümmten Abstützfläche kann sich der Haltevorsprung an einer ebenfalls gekrümmten Hinterschneidungsfläche eines Hinterschneidungsabschnitts einer Nut in dem zugehörigen Bauteil abstützen, wobei diese Hinterschneidungsfläche ebenfalls in einem Längsschnitt kreisbogenförmig ist und denselben Krümmungsradius aufweist wie die gekrümmte Abstützfläche des Haltevorsprungs. Durch den Eingriff zwischen dem Haltevorsprung und dem Hinterschneidungsabschnitt der Nut ergibt sich eine formschlüssige Verbindung zwischen dem Bauteil und dem Verbindungselement.

Der Haltevorsprung des erfindungsgemäßen Verbindungsmittels ist vorzugsweise nicht selbstschneidend ausgebildet.

Vielmehr ist der Haltevorsprung dafür vorgesehen, in eine bereits vor dem Einbringen des Verbindungselements in das Bauteil hergestellte Nut mit einem Hinterschneidungsabschnitt in dem betreffenden Bauteil in der Längsrichtung der Nut eingeschoben zu werden. In diesem Fall lässt sich der Haltevorsprung mit geringem Kraftaufwand in dem Hinterschneidungsabschnitt der Nut in Tangentialrichtung verschieben, so dass das Verbindungselement in dieser Richtung noch einen Bewegungsfreiheitsgrad besitzt und somit beim Verbinden der Bauteile noch Korrekturen bezüglich der gegenseitigen Positionen möglich sind.

Der Haltevorsprung kann insbesondere stumpfe Enden und/oder abgerundete Einlaufschrägen an seinen Endbereichen aufweisen.

Ein nicht-selbstschneidender Haltvorsprung kann eine beliebig große Querschnittsfläche aufweisen, um die mechanische Stabilität des Haltevorsprungs zu erhöhen.

Insbesondere kann die Querschnittsfläche des Haltevorsprungs mindestens 1 mm² betragen.

Der Haltevorsprung kann einen im Wesentlichen rechteckigen oder einen im Wesentlichen trapezförmigen Querschnitt aufweisen.

Alternativ oder ergänzend hierzu kann vorgesehen sein, dass mindestens ein Haltevorsprung sich mit wachsendem Abstand von einem Grundkörper des jeweiligen Verbindungselements verjüngt.

Andererseits kann vorgesehen sein, dass mindestens ein Haltevorsprung sich mit abnehmendem Abstand von einem Grundkörper des jeweiligen Verbindungselements verjüngt.

Alternativ oder ergänzend hierzu ist auch denkbar, dass mindestens ein Haltevorsprung einen Querschnitt mit einer zumindest abschnittsweise gekrümmten Außenkontur aufweist.

Bei einer bevorzugten Ausgestaltung der Erfindung ist vorgesehen, dass mindestens ein Haltevorsprung im Wesentlichen flächenbündig an die gekrümmte Anlagefläche des jeweiligen Verbindungselements angrenzt. In diesem Fall ist der Haltevorsprung also an dem dem Nutgrund zugewandten äußersten Rand des zugehörigen Verbindungselements angeordnet.

Alternativ oder ergänzend hierzu kann auch vorgesehen sein, dass mindestens ein Haltevorsprung gegenüber der gekrümmten Anlagefläche des jeweiligen Verbindungselements versetzt angeordnet ist. Der Haltevorsprung kann also insbesondere einen kleineren Krümmungsradius aufweisen als die gekrümmte Anlagefläche des jeweiligen Verbindungselements.

Ferner kann vorgesehen sein, dass an demselben Verbindungselement mehrere Haltevorsprünge angeordnet sind, welche unterschiedliche Krümmungsradien aufweisen. Insbesondere können mehrere Haltevorsprünge mit unterschiedlichen Krümmungsradien auf derselben Seite des jeweiligen Verbindungselements angeordnet sein.

Alternativ oder ergänzend zu einer Verankerung der Verbindungselemente mittels eines oder mehrerer Haltevorsprünge kann auch vorgesehen sein, dass mindestens eines der Verbindungselemente mit mindestens einem Verankerungselement zum Festlegen des betreffenden Verbindungselements an einem Nutgrund einer in einem der Bauteile vorgesehenen Nut versehen ist.

Ferner kann vorgesehen sein, dass mindestens eines der Verbindungselemente mit mindestens einer Verankerungsschraube zum Festlegen des betreffenden Verbindungselements an einem der Bauteile versehen ist.

Es kann vorgesehen sein, dass ein Verbindungselement, insbesondere ein Grundkörper und/oder ein Federelement und/oder ein Verstärkungselement und/oder ein Aufnahmeelement, ein glasfaserverstärktes Polyamidmaterial umfasst oder aus einem glasfaserverstärkten Polyamidmaterial gebildet ist.

Die Verbindungselemente sind insbesondere miteinander verrastbar.

Der Eingriffsabschnitt des Federelements weist vorzugsweise eine Schrägfläche auf, welche mit einer Schrägfläche des Aufnahmeelements derart in Kontakt bringbar ist, dass die Verbindungselemente im verbundenen Zustand mittels einer Verbindungskraft aufeinander zu gezogen werden.

Aufgrund der Schrägfläche des Eingriffsabschnitts des Federelements und/oder aufgrund der Schrägfläche des Aufnahmeelements können die Verbindungselemente vorzugsweise voneinander gelöst werden, ohne das Federelement oder das Aufnahmeelement irreversibel zu deformieren.

Das zweite Verbindungselement, welches das Aufnahmeelement umfasst, ist vorzugsweise vollständig in einer Nut des zweiten Bauteils anordenbar, so dass insbesondere kein Element oder Bestandteil des zweiten Verbindungselements über eine Oberfläche, insbesondere Hauptfläche, des zweiten Bauteils herausragt.

Insbesondere dann, wenn das Aufnahmeelement zumindest teilweise elastisch oder nachgiebig ausgebildet ist, kann ein zur Gewährleistung einer gewünschten Haltekraft benötigter Federweg des Federelements reduziert werden.

Mindestens ein Federelement und/oder mindestens ein Hilfsfederelement sind beispielsweise als ein Blattfederelement ausgebildet.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen Längsschnitt durch zwei Bauteile und zwei Verbindungselemente eines Verbindungsmittels zum Verbinden der beiden Bauteile, in einem getrennten Zustand der Bauteile;
- Fig. 2: eine der Fig. 1 entsprechende schematische Schnittdarstellung der Bauteile und des Verbindungsmittels in einem Zwischenzustand zwischen dem verbundenen Zustand und dem getrennten Zustand;
- Fig. 3: eine der Fig. 1 entsprechende schematische Schnittdarstellung der Bauteile und des Verbindungsmittels, in einem verbundenen Zustand der Bauteile und der Verbindungselemente des Verbindungsmittels;
- Fig. 4: eine schematische perspektivische Darstellung eines ersten Verbindungselements des Verbindungsmittels;
- Fig. 5: einen schematischen Längsschnitt durch das erste Verbindungselement aus Fig. 4;
- Fig. 6: eine der Fig. 4 entsprechende schematische perspektivische Darstellung eines zweiten Verbindungselements des Verbindungsmittels;
- Fig. 7: eine der Fig. 5 entsprechende Schnittdarstellung des zweiten Verbindungselements aus Fig. 6;
- Fig. 8: eine schematische perspektivische Darstellung des ersten Verbindungselements und des ersten Bauteils, in einem getrennten Zustand;
- Fig. 9: eine der Fig. 8 entsprechende schematische perspektivische Darstellung des ersten Verbindungselements und des ersten Bauteils, in einem Zwischenzustand zwischen dem getrennten Zustand und einem montierten Zustand, in welchem das erste Verbindungselement an dem ersten Bauteil montiert ist;
- Fig. 10: eine der Fig. 8 entsprechende schematische perspektivische Darstellung des ersten Verbindungselements und des ersten Bauteils, wobei das erste Verbindungselement an dem ersten Bauteil montiert ist;
- Fig. 11: eine schematische perspektivische Darstellung des zweiten Verbindungselements und des zweiten Bauteils, in einem getrennten Zustand;
- Fig. 12: eine der Fig. 11 entsprechende schematische perspektivische Darstellung des zweiten Verbindungselements und des zweiten Bauteils, in einem Zwischenzustand zwischen dem getrennten Zustand und einem montierten Zustand, in welchem das zweite Verbindungselement an dem zweiten Bauteil montiert ist; und
- Fig. 13: eine der Fig. 11 entsprechende schematische perspektivische Darstellung des zweiten Verbindungselements und des zweiten Bauteils, wobei das zweite Verbindungselement an dem zweiten Bauteil montiert ist.

Gleiche oder funktional äquivalente Elemente sind in sämtlichen Figuren mit denselben Bezugszeichen versehen.

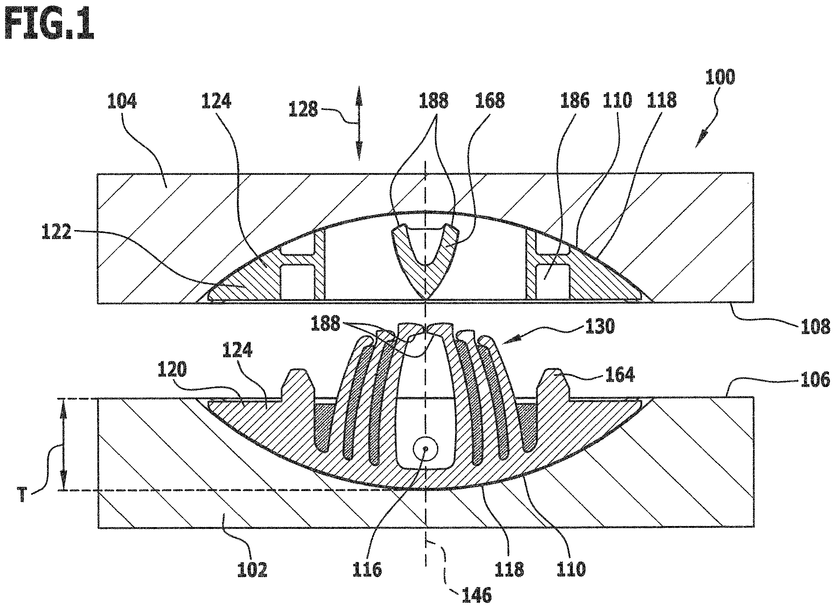

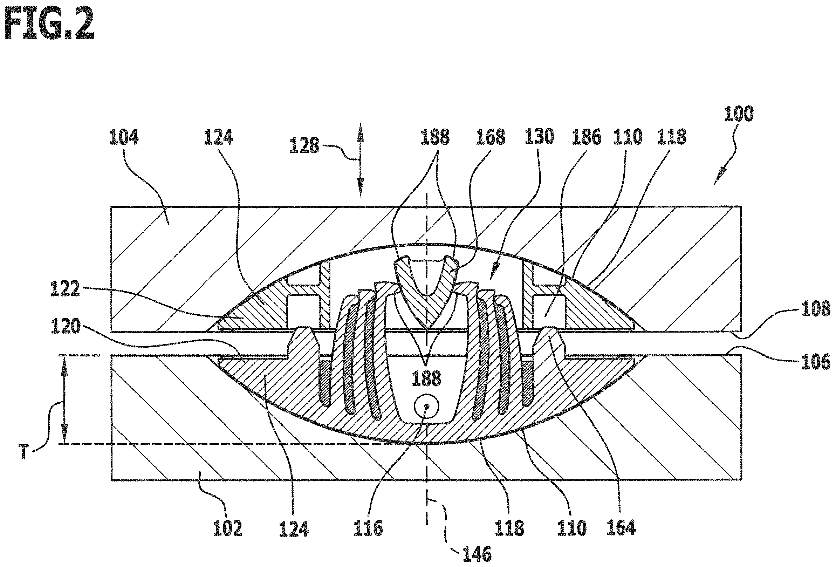

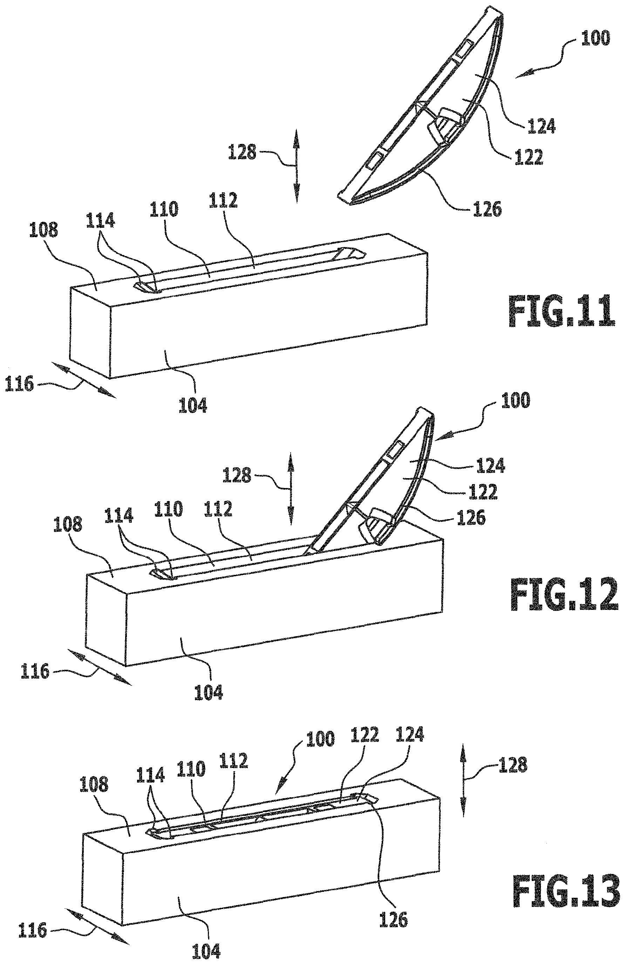

Eine in den Fig. 1 bis 13 dargestellte Ausführungsform eines als Ganzes mit 100 bezeichneten Verbindungsmittels dient zur Verbindung eines ersten, beispielsweise im Wesentlichen plattenförmigen Bauteils 102 mit einem zweiten, ebenfalls vorzugsweise im Wesentlichen plattenförmigen Bauteil 104.

Die beiden Bauteile 102 und 104 können beispielsweise Holzplatten oder Sperrholzplatten sein, aber auch aus beliebigen anderen Materialien, beispielsweise aus einem metallischen Material oder einem Kunststoffmaterial, beispielsweise aus Plexiglas, bestehen. Ferner kann vorgesehen sein, dass das erste Bauteil 102 und das zweite Bauteil 104 aus voneinander verschiedenen Materialien gebildet sind.

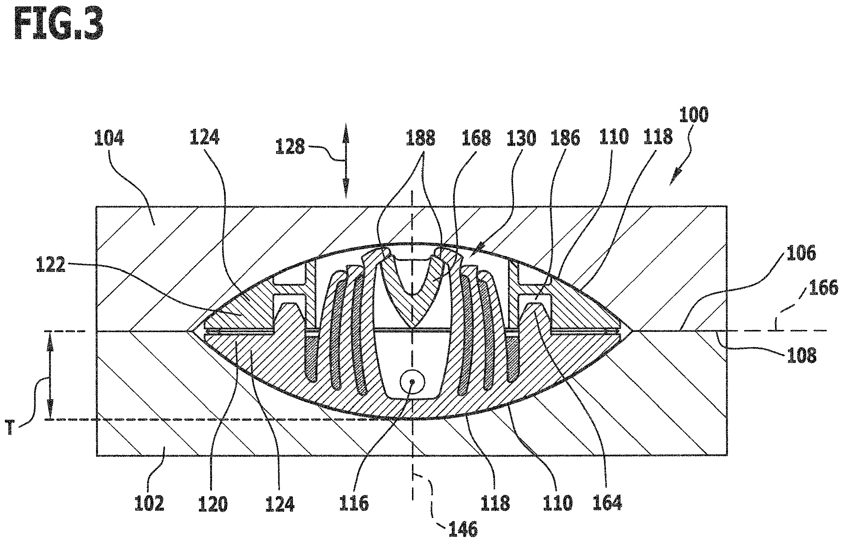

In dem in Fig. 3 dargestellten verbundenen Zustand der beiden Bauteile 102 und 104 liegt eine Kontaktfläche 106 des ersten Bauteils 102, welche beispielsweise an einer Schmalseite oder Stirnseite des ersten Bauteils 102 angeordnet ist, an einer Kontaktfläche 108 des zweiten Bauteils 104 an, welche beispielsweise eine Hauptfläche des plattenförmigen zweiten Bauteils 104 ist.

Sowohl in dem ersten Bauteil 102 als auch in dem zweiten Bauteil 104 ist jeweils mindestens eine Nut 110 vorgesehen, welche zur jeweiligen Kontaktfläche 106, 108 hin geöffnet ist.

Die Nut 110 umfasst einen kreiszylindersegmentförmigen oder einen kreiszylinderabschnittsförmigen Basisabschnitt 112 und zwei sich in einer Dickenrichtung 116 von dem Basisabschnitt 112 weg erstreckende Hinterschneidungsabschnitte 114.

Der Krümmungsradius des Basisabschnitts 112 ist größer als eine Nuttiefe T (siehe Fig. 1), so dass eine gewölbte Nutgrundfläche 118 mit der jeweiligen Kontaktfläche 106, 108 einen spitzen Winkel einschließt.

Insbesondere hinsichtlich der weiteren Ausgestaltung der Nut 110 und der Herstellung einer solchen Nut 110 wird hiermit ausdrücklich auf die EP 1 990 549 A1 Bezug genommen, welche durch diese Inbezugnahme zum Bestandteil dieser Beschreibung gemacht wird.

Zur Verbindung der Bauteile 102, 104 miteinander umfasst das Verbindungsmittel 100 ein erstes Verbindungselement 120 und ein zweites Verbindungselement 122.

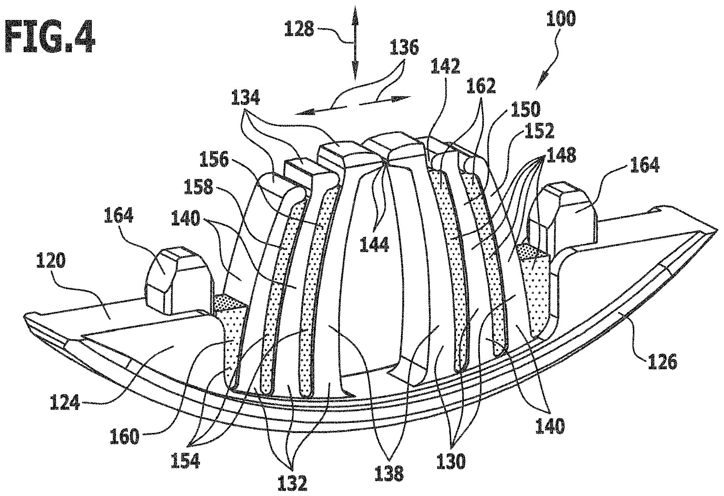

Wie insbesondere den Fig. 4 bis 7 zu entnehmen ist, umfasst jedes der Verbindungselemente 120, 122 einen Grundkörper 124, welcher im Wesentlichen kreiszylindersegmentförmig oder kreiszylinderabschnittsförmig ausgebildet ist.

Der Grundkörper 124 ist insbesondere zumindest abschnittsweise und zumindest näherungsweise komplementär zu dem Basisabschnitt 112 der Nut 110 ausgebildet.

Jedes der Verbindungselemente 120, 122 umfasst ferner zwei Haltevorsprünge 126, welche sich in der Dickenrichtung 116 von dem komplementär zu dem Basisabschnitt 112 ausgebildeten Abschnitt des Grundkörpers 124 weg erstrecken.

Die Haltevorsprünge 126 sind bogenförmig gekrümmt und zumindest näherungsweise im Wesentlichen komplementär zu den Hinterschneidungsabschnitten 114 der Nut 110 ausgebildet.

Mittels der Haltevorsprünge 126 können die Verbindungselemente 120, 122 somit zumindest bezüglich einer Verbindungsrichtung 128 formschlüssig an den Bauteilen 102, 104, insbesondere in den Nuten 110 der Bauteile 102, 104, festgelegt werden.

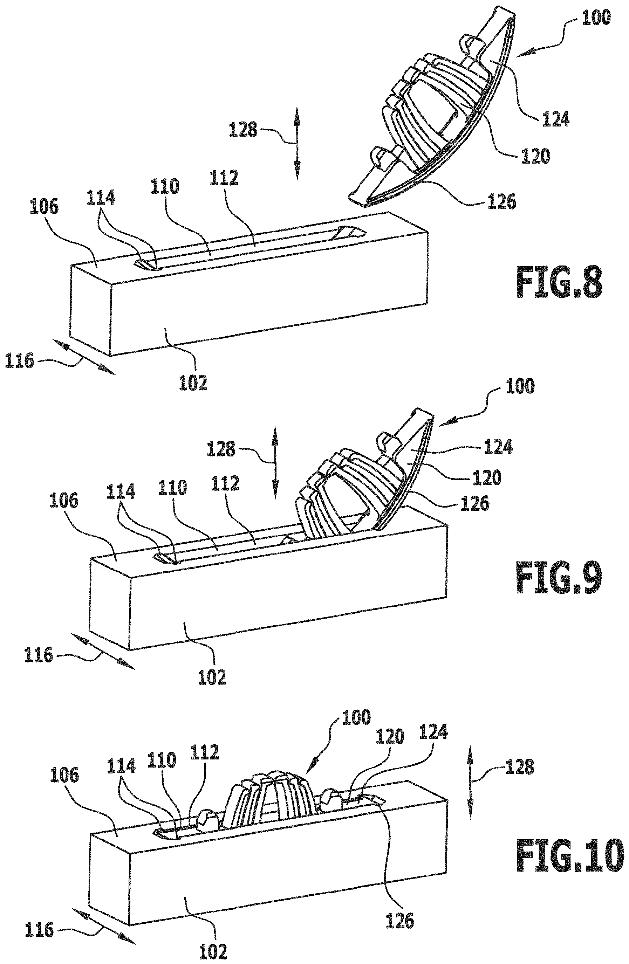

Die Verbindungselemente 120, 122 sind hierzu längs der Hinterschneidungsabschnitte 114 in die Nuten 110 der Bauteile 102, 104 einschiebbar (siehe insbesondere Fig. 8 bis 13).

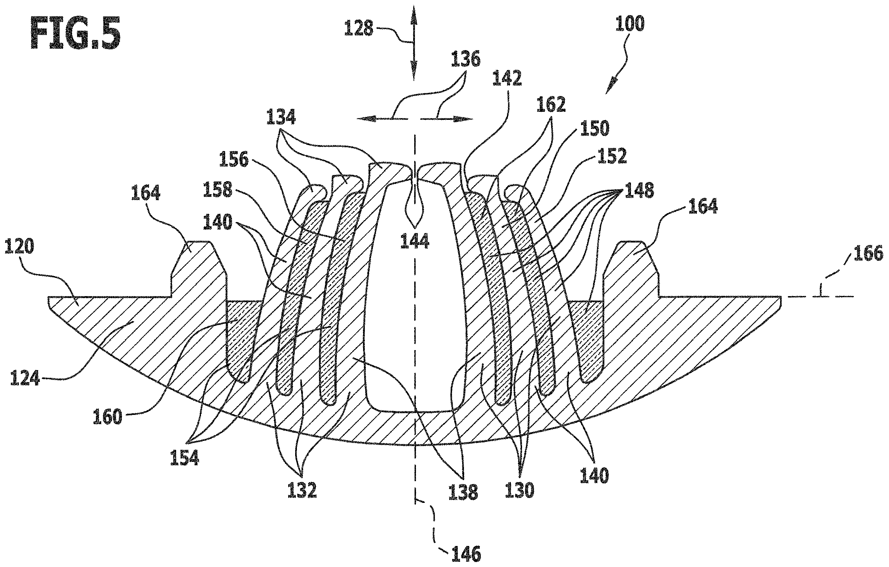

Wie insbesondere den Fig. 4 und 5 zu entnehmen ist, umfasst das erste Verbindungselement 120 den Grundkörper 124, die Haltevorsprünge 126 und mehrere Federelemente 130.

Die Federelemente 130 sind beispielsweise Blattfedern.

Jedes Federelement 130 weist ein dem Grundkörper 124 zugewandtes Ende 132 sowie ein dem Grundkörper 124 abgewandtes Ende 134 auf.

Mit dem dem Grundkörper 124 zugewandten Ende 132 eines jeden Federelements 130 ist das Federelement 130 an dem Grundkörper 124 angeordnet, insbesondere einstückig mit dem Grundkörper 124 verbunden.

Das dem Grundkörper 124 abgewandte Ende 134 eines jeden Federelements 130 ist in einer quer, insbesondere im Wesentlichen senkrecht, zur Verbindungsrichtung 128 ausgerichteten Auslenkrichtung 136 beweglich.

Die Federelemente 130 sind hierzu biegbar ausgebildet.

Bei der in den Figuren dargestellten Ausführungsform des ersten Verbindungselements 120 sind zwei Federelemente 130 vorgesehen, welche zur Verbindung der Verbindungselemente 120, 122 in direkten Kontakt mit einem (noch zu beschreibenden) Aufnahmeelement des zweiten Verbindungselements 122 gelangen. Diese Federelemente 130 sind daher Hauptfederelemente 138.

Die weiteren Federelemente 130 sind Hilfsfederelemente 140, welche zur Verbindung der Verbindungselemente 120, 122 nur indirekt, nämlich mittels der Hauptfederelemente 138, mit dem Aufnahmeelement des zweiten Verbindungselements 122 zusammenwirken.

Die Hilfsfederelemente 140 sind benachbart zu den Hauptfederelementen 138 angeordnet und weisen Anlageabschnitte 142 an dem dem Grundkörper 124 abgewandten Ende 134 der Hilfsfederelemente 140 auf, mittels welchen die Hilfsfederelemente 140 an den Hauptfederelementen 138 anlegbar sind, um auf die Hauptfederelemente 138 einwirken zu können.

Die Hauptfederelemente 138 umfassen an dem dem Grundkörper 124 abgewandten Ende 134 der Hauptfederelemente 138 jeweils einen Eingriffsabschnitt 144, mit welchem die Hauptfederelemente 138 zur Verbindung der Verbindungselemente 120, 122 mit dem Aufnahmeelement des zweiten Verbindungselements 122 in Eingriff bringbar sind.

Insbesondere die Eingriffsabschnitte 144 der Hauptfederelemente 138 sind in der Auslenkrichtung 136 auslenkbar, um mit dem Aufnahmeelement des zweiten Verbindungselements 122 in Eingriff gebracht zu werden.

Die Hilfsfederelemente 140 sind auf den den Eingriffsabschnitten 144 abgewandten Seiten der Hauptfederelemente 138 angeordnet.

Bei der in den Figuren dargestellten Ausführungsform des ersten Verbindungselements 120 sind insgesamt sechs Federelemente 130, nämlich zwei Hauptfederelemente 138 und vier Hilfsfederelemente 140, vorgesehen.

Die Federelemente 130 sind dabei so angeordnet, dass sich ein Hauptfederelement 138 und zwei diesem Hauptfederelement 138 zugeordnete Hilfsfederelemente 140 einerseits und ein Hauptfederelement 138 und zwei diesem Hauptfederelement 138 zugeordnete Hilfsfederelemente 140 andererseits bezüglich einer parallel zur Verbindungsrichtung 128 verlaufenden Quermittelebene 146 des ersten Verbindungselements 120 spiegelsymmetrisch gegenüberliegen.

Die Eingriffsabschnitte 144 der Hauptfederelemente 138 können vorzugsweise in einander entgegengesetzten Auslenkrichtungen 136 von der Quermittelebene 146 weg bewegt werden. Hierbei wird bewirkt, dass die dem Grundkörper 124 abgewandten Enden 134 der Hilfsfederelemente 140 ebenfalls in den entsprechenden Auslenkrichtungen 136 ausgelenkt werden.

Die zur Auslenkung benötigte Kraft wird durch die zusätzliche Auslenkung der Hilfsfederelemente 140 deutlich erhöht, da die der Auslenkung entgegenwirkende Federkraft zumindest näherungsweise eine Summe der Federkraft des Hauptfederelements 138 und der zugeordneten Hilfsfederelemente 140 ist.

Die Hilfsfederelemente 140 bilden somit Verstärkungselemente 148 zur Verstärkung einer Federwirkung oder Federkraft des Hauptfederelements 138.

Wie insbesondere Fig. 5 zu entnehmen ist, ist dabei insbesondere vorgesehen, dass ein erstes Hilfsfederelement 150 bei einer Auslenkung des Hauptfederelements 138 direkt auf das Hauptfederelement 138 wirkt. Ein zweites Hilfsfederelement 152 wirkt bei einer Auslenkung des Hauptfederelements 138 und des ersten Hilfsfederelements 150 direkt auf das erste Hilfsfederelement 150.

Vorzugsweise ist zwischen den Federelementen 130 ein Zwischenraum 154 gebildet.

Bei der in den Figuren dargestellten Ausführungsform ist ein erster Zwischenraum 156 zwischen dem Hauptfederelement 138 und dem ersten Hilfsfederelement 150 sowie ein zweiter Zwischenraum 158 zwischen dem ersten Hilfsfederelement 150 und dem zweiten Hilfsfederelement 152 vorgesehen.

Ein dritter Zwischenraum 160 kann beispielsweise zwischen dem zweiten Hilfsfederelement 152 und einem Abschnitt des Grundkörpers 124, beispielsweise einem (noch zu beschreibenden) Einsteckvorsprung des Grundkörpers 124, ausgebildet sein.

Zur weiteren Verstärkung der Federwirkung oder Federkraft der Federelemente 130, insbesondere der Hauptfederelemente 138, sind die Zwischenräume 154, insbesondere der erste Zwischenraum 156, der zweite Zwischenraum 158 und/oder der dritte Zwischenraum 160, vorzugsweise zumindest abschnittsweise mit einem Füllmaterial gefüllt.

Das Füllmaterial kann beispielsweise ein spritzbares Elastomermaterial und/oder ein thermoplastisches Material sein, welches vorzugsweise großflächig, insbesondere stoffschlüssig, mit den Federelementen 130 und/oder dem Grundkörper 124 verbunden ist.

Da diese Verbindung der Federelemente 130 untereinander und/oder mit dem Grundkörper 124 eine Auslenkung der Federelemente 130 erschwert und somit zu einer Versteifung der Federelemente 130 beiträgt, bildet jeder gefüllte Zwischenraum 154 ein Versteifungselement 162 zur Versteifung der Federelemente 130, insbesondere des Hauptfederelements 138.

Die Versteifungselemente 162 sind somit auch Verstärkungselemente 148 zum Verstärken einer Federwirkung oder Federkraft der Federelemente 130, insbesondere des Hauptfederelements 138.

Aufgrund der großflächigen Verbindung der Versteifungselemente 162 mit den Federelementen 130 und/oder mit dem Grundkörper 124 werden die Versteifungselemente 162 bei einer Auslenkung der Federelemente 130 im Wesentlichen auf Scherung beansprucht.

Das erste Verbindungselement 120 umfasst ferner mindestens einen, vorzugsweise zwei, Einsteckvorsprünge 164, welche mit (noch zu beschreibenden) Aufnahmetaschen des zweiten Verbindungselements 122 in Eingriff bringbar sind, um die Verbindungselemente 120, 122 gezielt relativ zueinander positionieren zu können.

Die Federelemente 130 und die Versteifungselemente 162 sowie die Einsteckvorsprünge 164 ragen vorzugsweise zumindest teilweise über eine Verbindungsebene 166 hinaus, längs welcher die Bauteile 102, 104 und/oder die Verbindungselemente 120, 122 im verbundenen Zustand derselben aneinander anliegen.

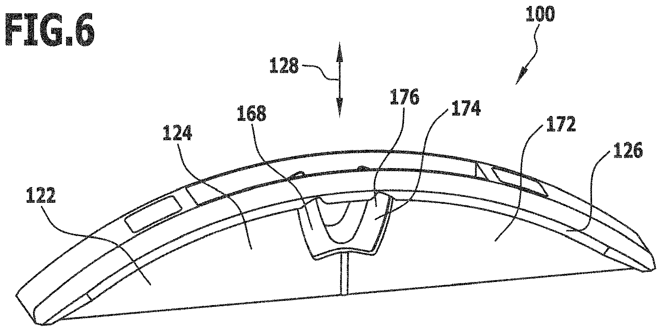

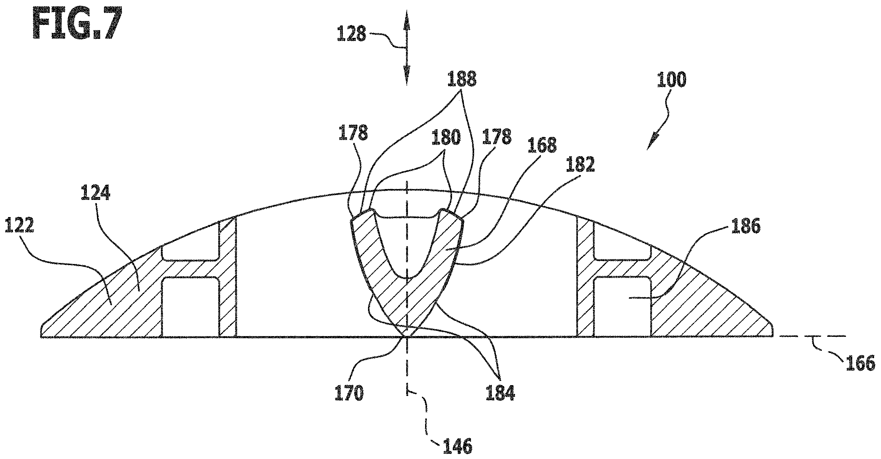

Wie insbesondere den Fig. 6 und 7 zu entnehmen ist, umfasst das zweite Verbindungselement 122 ebenfalls einen Grundkörper 124, welcher zumindest abschnittsweise und zumindest näherungsweise komplementär zu der Nut 110 der Bauteile 102, 104 geformt ist.

Das zweite Verbindungselement 122 umfasst ferner zwei Haltevorsprünge 126, welche bogenförmig ausgebildet und im Wesentlichen komplementär zu den Hinterschneidungsabschnitten 114 der Nut 110 ausgebildet sind.

Auch das zweite Verbindungselement 122 kann somit einfach in eine Nut 110 eingeführt und darin festgelegt werden.

Das zweite Verbindungselement 122 umfasst ein Aufnahmeelement 168, mittels welchem das zweite Verbindungselement 122 mit dem ersten Verbindungselement 120, insbesondere mit den Federelementen 130 des ersten Verbindungselements 120, in Eingriff bringbar ist.

Das Aufnahmeelement 168 ist an einem der Verbindungsebene 166 zugewandten Ende 170 des Aufnahmeelements 168 an dem Grundkörper 124 angeordnet, insbesondere festgelegt (siehe insbesondere Fig. 6).

Das Aufnahmeelement 168 ist zwischen zwei Seitenwandungen 172 des Grundkörpers 124 des zweiten Verbindungselements 122 angeordnet.

In den Seitenwandungen 172 sind Ausnehmungen 174, insbesondere Öffnungen 176, derart vorgesehen, dass sich das zwischen den Seitenwandungen 172 erstreckende Aufnahmeelement 168 teilweise längs dieser Ausnehmungen 174 erstreckt und somit in diesem Bereich nicht mit der Seitenwandung 172 und somit nicht mit dem Grundkörper 124 verbunden ist.

Diese Bereiche des Aufnahmeelements 168, welche nicht mit der Seitenwandung 172 des Grundkörpers 124 des zweiten Verbindungselements 122 verbunden sind, bilden Aufnahmevorsprünge 178 des Aufnahmeelements 168.

Die Aufnahmevorsprünge 178 des Aufnahmeelements 168 sind insbesondere biegbar ausgebildet.

Das Aufnahmeelement 168 ist mittig in dem zweiten Verbindungselement 122 angeordnet und bezüglich der Quermittelebene 146 des zweiten Verbindungselements 122 spiegelsymmetrisch ausgebildet. Insbesondere sind die Aufnahmevorsprünge 178 des Aufnahmeelements 168 bezüglich der Quermittelebene 146 spiegelsymmetrisch zueinander ausgebildet und spiegelsymmetrisch zueinander angeordnet.

Eine äußere Oberfläche 182 des Aufnahmeelements 168 weist vorzugsweise zumindest näherungsweise eine Parabelform auf, wobei eine x-Achse in der

Verbindungsebene 166 und eine y-Achse in der Quermittelebene 146 verläuft (siehe insbesondere Fig. 7).

Längs dieser Oberfläche 182 des Aufnahmeelements 168 werden die Hauptfederelemente 138, insbesondere die Eingriffsabschnitte 144 der Hauptfederelemente 138, beim Verbinden der Verbindungselemente 120, 122 miteinander bewegt. Aufgrund der Parabelform der Oberfläche 182 erfolgt dabei eine zunächst große und anschließend eine geringere Kraftzunahme bei der Auslenkung der Hauptfederelemente 138.

Die Federelemente 130, insbesondere die Hauptfederelemente 138, werden bei der Bewegung längs der Oberfläche 182 des Aufnahmeelements 168 gespannt, so dass die Oberfläche 182 des Aufnahmeelements 168 einen Spannabschnitt 184 des Aufnahmeelements 168 bildet.

Das zweite Verbindungselement 122 umfasst ferner zwei Aufnahmetaschen 186 zur Aufnahme der Einsteckvorsprünge 164 des ersten Verbindungselements 120.

Wie insbesondere Fig. 3 zu entnehmen ist, liegen die Eingriffsabschnitte 144 der Hauptfederelemente 138 und die Aufnahmevorsprünge 178 des Aufnahmeelements 168 im verbundenen Zustand jeweils mit Schrägflächen 188 aneinander an.

Mittels dieser Schrägflächen 188 kann einerseits bewirkt werden, dass im verbundenen Zustand der Verbindungselemente 120, 122 eine Zugkraft auf die Verbindungselemente 120, 122 ausgeübt wird, welche die Verbindungselemente 120, 122 gegeneinander zieht. Andererseits kann mittels der Schrägflächen 188 gewährleistet werden, dass die Verbindungselemente 120, 122 beschädigungsfrei voneinander entfernt werden können. Insbesondere können die Hauptfederelemente 138 des ersten Verbindungselements 120 aufgrund der Schrägflächen 188 vorzugsweise entgegen der Verbindungsrichtung 128 an den Schrägflächen 188 des Aufnahmeelements 168 entlanggleiten und hierdurch die Eingriffsabschnitte 144 der Hauptfederelemente 138 mit den Aufnahmevorsprüngen 178 des Aufnahmeelements 168 außer Eingriff gebracht werden.

Bei weiteren (nicht dargestellten) Ausführungsformen des Verbindungsmittels 100 kann beispielsweise eine andere Anzahl von Hauptfederelementen 138, Hilfsfederelementen 140 und/oder Versteifungselementen 162 vorgesehen sein. Ferner kann bei alternativen Ausführungsformen vorgesehen sein, dass die Hauptfederelemente 138 so ausgebildet und angeordnet sind, dass die Eingriffsabschnitte 144 der Hauptfederelemente 138 einander abgewandt angeordnet und zur Auslenkung der Hauptfederelemente 138 aufeinander zu bewegbar sind. Das zugehörige zweite Verbindungselement 122 umfasst dann vorzugsweise zwei voneinander beabstandete Aufnahmeelemente 168, welche im verbundenen Zustand der Verbindungselemente 120, 122 auf den der Quermittelebene 146 abgewandten Seiten der Hauptfederelemente 138 angeordnet sind.

Die in den Fig. 1 bis 13 dargestellte Ausführungsform des Verbindungsmittels 100 funktioniert wie folgt:
Zunächst werden die Bauteile 102, 104 an den im montierten Zustand der Bauteile 102, 104 einander gegenüberliegenden Stellen mit den Nuten 110 versehen. Insbesondere werden die Nuten 110 mit einem speziellen Werkzeug, welches beispielsweise aus der EP 1 990 549 A1 bekannt ist, in die Bauteile 102, 104 eingefräst.

Wie insbesondere den Fig. 8 bis 10 und 11 bis 13 zu entnehmen ist, können die Verbindungselemente 120 bzw. 122 durch einfaches Einschieben in die Nuten 110 eingebracht werden.

Dadurch, dass die Haltevorsprünge 126 der Verbindungselemente 120, 122 bei diesem Einschiebevorgang mit den Hinterschneidungsabschnitten 114 der Nuten 110 in Eingriff gebracht werden, werden die Verbindungselemente 120, 122 zumindest bezüglich einer Bewegung der Verbindungselemente 120, 122 in der Verbindungsrichtung 128 formschlüssig in den Bauteilen 102, 104 festgelegt.

Das erste Verbindungselement 120 wird dabei in dem ersten Bauteil 102 festgelegt.

Dies kann insbesondere dann relevant sein, wenn das erste Bauteil 102 dasjenige Bauteil 102, 104 ist, welches mit seiner Schmalseite oder Stirnseite mit einer Hauptseite eines zweiten Bauteils 104 verbunden werden soll.

Bei der Anordnung der Nuten 110 und somit der Verbindungselemente 120, 122 an den Schmalseiten bzw. Stirnseiten von insbesondere plattenförmigen Bauteilen 102, 104 ist es nämlich in der Regel unkritisch, wenn Teile des ersten Verbindungselements 120, insbesondere die Einsteckvorsprünge 164, die Hauptfederelemente 138, die Hilfsfederelemente 140 und/oder die Versteifungselemente 162, über eine Oberfläche des Bauteils 102, 104, insbesondere eine Kontaktfläche 106, an welcher die Bauteile 102, 104 aneinander anliegen, überstehen.

Das zweite Verbindungselement 122 ist vorzugsweise in einer in der Hauptfläche des zweiten Bauteils 104 angeordneten Nut 110 angeordnet, wobei das zweite Verbindungselement 122 nicht über die Hauptfläche, insbesondere die Kontaktfläche 106, hinausragt.

Das zweite Bauteil 104 kann somit trotz bereits montiertem zweitem Verbindungselement 122 mittels der Hauptfläche auf weiteren, insbesondere plattenförmigen, Bauteilen 102, 104 gestapelt werden, ohne eine Beschädigung der Bauteile 102, 104 oder des zweiten Verbindungselements 122 befürchten zu müssen.

Zur Verbindung der Verbindungselemente 120, 122 und somit der Bauteile 102, 104 miteinander werden die Bauteile 102, 104 samt den darin angeordneten Verbindungselementen 120, 122 längs der Verbindungsrichtung 128, welche vorzugsweise senkrecht zur Verbindungsebene 166 ist, aufeinander zu bewegt.

Wie insbesondere den Fig. 1 bis 3 zu entnehmen ist, gelangen dabei zunächst die Hauptfederelemente 138 mit dem Aufnahmeelement 168, insbesondere mit dem Spannabschnitt 184 des Aufnahmeelements 168, in Eingriff.

Die Eingriffsabschnitte 144 der Hauptfederelemente 138 werden bei der Bewegung derselben längs des Spannabschnitts 184 des Aufnahmeelements 168 in den Auslenkrichtungen 136 von der Quermittelebene 146 weg bewegt. Die Hauptfederelemente 138 werden dabei ausgelenkt und somit gespannt.

Durch die Auslenkung der Hauptfederelemente 138 werden auch die Hilfsfederelemente 140 ausgelenkt und zudem die Versteifungselemente 162 auf Scherung belastet.

Aufgrund der Hilfsfederelemente 140 und der Versteifungselemente 162 wird die zum Auslenken der Hauptfederelemente 138 benötigte Kraft und somit auch die Federkraft der Hauptfederelemente 138 verstärkt.

Es muss somit eine deutlich größere Kraft aufgewandt werden, um die Verbindungselemente 120, 122 miteinander zu verbinden, als wenn die Hauptfederelemente 138 ohne die genannten Verstärkungselemente 148 vorgesehen wären.

Aufgrund der Parabelform der Oberfläche 182 des Aufnahmeelements 168 ergibt sich beim Aufschieben des ersten Verbindungselements 120 auf das zweite Verbindungselement 122 zunächst eine zügigere und anschließend eine langsamere Auslenkung der Hauptfederelemente 138.

Insbesondere kann hierdurch eine große Federspannung erzeugt werden, um die Verbindungselemente 120, 122 und somit auch die Bauteile 102, 104 fest miteinander zu verbinden, wobei zugleich eine zum Verbinden der Verbindungselemente 120, 122 benötigte Maximalkraft reduziert wird.

Das Verbinden der Verbindungselemente 120, 122 miteinander wird bei der in den Figuren dargestellten Ausführungsform zudem dadurch optimiert, dass die Aufnahmevorsprünge 178 des Aufnahmeelements 168 nachgiebig, insbesondere biegsam, ausgebildet sind. Die Eingriffsabschnitte 144 der Hauptfederelemente 138 können hierdurch einfacher an den Aufnahmevorsprüngen 178 des Aufnahmeelements 168 vorbeibewegt werden.

Ein unerwünschtes seitliches Verschieben der Verbindungselemente 120, 122 relativ zueinander, insbesondere senkrecht zur Verbindungsrichtung 128, wird in dem verbundenen Zustand der Verbindungselemente 120, 122 durch die Einsteckvorsprünge 164 und die zugehörigen Aufnahmetaschen 186 wirksam verhindert.

Dadurch, dass das Verbindungsmittel 100 Federelemente 130 und Verstärkungselemente 148 zur Verstärkung der Federkraft der Federelemente 130 umfasst, können die Verbindungselemente 120, 122 und somit auch die Bauteile 102, 104 einfach und zuverlässig miteinander verbunden werden.

## Patentansprüche

1. Verbindungsmittel (100) zum Verbinden eines ersten Bauteils (102) und eines zweiten Bauteils (104), insbesondere zum Verbinden von Möbel- oder Maschinenteilen, umfassend:
- ein im verbundenen Zustand der Bauteile an dem ersten Bauteil (102) angeordnetes erstes Verbindungselement (120) und
- ein im verbundenen Zustand der Bauteile an dem zweiten Bauteil (104) angeordnetes zweites Verbindungselement (122), welches ein Aufnahmeelement (168) umfasst,
wobei mindestens eines der Verbindungselemente (120, 122) eine gekrümmte Anlagefläche umfasst, die in einem Längsschnitt kreisbogenförmig ist,
**dadurch gekennzeichnet,**
**dass** das erste Verbindungselement (120) ein Federelement (130) und mindestens zwei als Hilfsfederelemente (140) ausgebildete Verstärkungselemente (148) zum Verstärken einer Federkraft des Federelements (130) umfasst, wobei mindestens ein Hilfsfederelement (140) zum Verstärken der Federkraft des Federelements (130) direkt auf das Federelement (130) einwirkt und wobei mindestens ein Hilfsfederelement (140) zum Verstärken der Federkraft des Federelements (130) direkt auf das mindestens eine Hilfsfederelement (140) einwirkt, welches direkt auf das Federelement (130) einwirkt, wobei zum Verbinden des ersten Bauteils (102) und des zweiten Bauteils (104) das Federelement (130) mit dem Aufnahmeelement (168) in Eingriff bringbar ist, wobei das erste Verbindungselement (120) ein einstückiges Spritzgussbauteil umfasst, welches das Federelement (130), die Verstärkungselemente (148) und einen Grundkörper (124) des ersten Verbindungselements (120) umfasst, wobei die mindestens zwei Hilfsfederelemente (140) zumindest näherungsweise eine dem Federelement (130) entsprechende Form aufweisen.

2. Verbindungsmittel (100) nach Anspruch 1, **dadurch gekennzeichnet, dass** das Aufnahmeelement (168) einen Aufnahmevorsprung (178) und/oder eine Aufnahmevertiefung umfasst.

3. Verbindungsmittel (100) nach einem der Ansprüche 1 oder 2, **dadurch gekennzeichnet, dass** das Aufnahmeelement (168) einen Spannabschnitt (184) umfasst, längs welchem ein Eingriffsabschnitt (144) des Federelements (130) zum Herstellen der Verbindung zwischen dem ersten Bauteil (102) und dem zweiten Bauteil (104) bewegbar ist, wobei das Federelement (130) hierdurch gespannt wird.

4. Verbindungsmittel (100) nach Anspruch 3, **dadurch gekennzeichnet, dass** der Spannabschnitt (184) einen im Wesentlichen parabelförmigen Querschnitt aufweist.

5. Verbindungsmittel (100) nach einem der Ansprüche 1 bis 4, **dadurch gekennzeichnet, dass** das Aufnahmeelement (168) zumindest abschnittsweise elastisch ausgebildet ist.

6. Verbindungsmittel (100) nach einem der Ansprüche 1 bis 5, **dadurch gekennzeichnet,**
**dass** das Aufnahmeelement (168) an einem dem ersten Verbindungselement (120) zugewandten Ende (170) des Aufnahmeelements (168) mit einem Grundkörper (124) des zweiten Verbindungselements (122) verbunden ist und
**dass** mindestens ein dem ersten Verbindungselement (120) abgewandtes Ende (180) des Aufnahmeelements (168) bewegbar ausgebildet ist.

7. Verbindungsmittel (100) nach einem der Ansprüche 1 bis 6, **dadurch gekennzeichnet, dass** das erste Verbindungselement (120) mindestens zwei Federelemente (130) umfasst, welche das Aufnahmeelement (168) im verbundenen Zustand beidseitig umgreifen.

8. Verbindungsmittel (100) nach einem der Ansprüche 1 bis 7, **dadurch gekennzeichnet, dass** das Aufnahmeelement (168) bezüglich einer senkrecht zu einer Verbindungsebene (166) des Verbindungsmittels (100) verlaufenden Quermittelebene (146) des Aufnahmeelements (168) symmetrisch ausgebildet ist.

9. Verbindungsmittel (100) nach einem der Ansprüche 1 bis 8, **dadurch gekennzeichnet, dass** das erste Verbindungselement (120) mindestens zwei Federelemente (130) und mindestens vier Verstärkungselemente (148) umfasst, wobei die mindestens zwei Federelemente (130) und die mindestens vier Verstärkungselemente (148) bezüglich einer senkrecht zu einer Verbindungsebene (166) des Verbindungsmittels (100) verlaufenden Quermittelebene (146) des ersten Verbindungselements (120) symmetrisch zueinander an dem ersten Verbindungselement (120) angeordnet und/oder symmetrisch zueinander ausgebildet sind.

10. Verbindungsmittel (100) nach einem der Ansprüche 1 bis 9, **dadurch gekennzeichnet, dass** mindestens ein Verbindungselement (120, 122) einen im Wesentlichen kreiszylindersegmentförmigen oder kreiszylinderabschnittsförmigen Grundkörper (124) und mindestens einen im Wesentlichen kreisbogenförmigen Haltevorsprung (126) umfasst, mittels welchem das mindestens eine Verbindungselement (120, 122) in dem Bauteil (102, 104) festlegbar ist.

## Claims

1. Connecting means (100) for connecting a first component (102) and a second component (104), in particular for connecting furniture parts or machine parts, comprising:
- a first connecting element (120) which in the connected state of the components is arranged on the first component (102), and
- a second connecting element (122) which in the connected state of the components is arranged on the second component (104) and comprises a receiving element (168),
wherein at least one of the connecting elements (120, 122) comprises a curved support surface, which is in the shape of a circular arc in longitudinal section,
**characterized in that**,
the first connecting element (120) comprises a spring element (130) and at least two reinforcing elements (148) that take the form of auxiliary spring elements (140) for reinforcing a spring force of the spring element (130), wherein, for reinforcing the spring force of the spring element (130), at least one auxiliary spring element (140) acts directly on the spring element (130) and wherein, for reinforcing the spring force of the spring element (130), at least one auxiliary spring element (140) acts directly on the at least one auxiliary spring element (140) which acts directly on the spring element (130), wherein, for connecting the first component (102) and the second component (104), the spring element (130) is configured to be brought into engagement with the receiving element (168), wherein the first connecting element (120) comprises a one-piece injection-molded component which comprises the spring element (130), the reinforcing elements (148), and a base body (124) of the first connecting element (120), wherein the at least two auxiliary spring elements (140) have at least approximately a shape corresponding to the spring element (130).

2. Connecting means (100) in accordance with Claim 1, **characterized in that** the receiving element (168) comprises a receiving projection (178) and/or a receiving recess.

3. Connecting means (100) in accordance with either one of Claims 1 or 2, **characterized in that** the receiving element (168) comprises a clamping portion (184) along which an engaging portion (144) of the spring element (130) is movable for producing the connection between the first component (102) and the second component (104), wherein the spring element (130) is thereby tensioned.

4. Connecting means (100) in accordance with Claim 3, **characterized in that** the clamping portion (184) has a substantially parabolic cross section.

5. Connecting means (100) in accordance with any one of Claims 1 to 4, **characterized in that** the receiving element (168) is constructed to be resilient, at least in certain regions.

6. Connecting means (100) in accordance with any one of Claims 1 to 5, **characterized in that**
the receiving element (168) is connected, at an end (170) of the receiving element (168) that faces the first connecting element (120), to a base body (124) of the second connecting element (122) and
**in that** at least one end (180) of the receiving element (168) that is remote from the first connecting element (120) is constructed to be movable.

7. Connecting means (100) in accordance with any one of Claims 1 to 6, **characterized in that** the first connecting element (120) comprises at least two spring element (130) which in the connected state embrace the receiving element (168) on both sides.

8. Connecting means (100) in accordance with any one of Claims 1 to 7, **characterized in that** the receiving element (168) is constructed to be symmetrical in relation to a transverse center plane (146) of the receiving element (168) that extends perpendicular to a connecting plane (166) of the connecting means (100).

9. Connecting means (100) in accordance with any one of Claims 1 to 8, **characterized in that** the first connecting element (120) comprises at least two spring elements (130) and at least four reinforcing elements (148), wherein, in relation to a transverse center plane (146) of the first connecting element (120) that extends perpendicular to a connecting plane (166) of the connecting means (100), the at least two spring elements (130) and the at least four reinforcing elements (148) are arranged symmetrically to one another on the first connecting element (120) and/or are constructed to be symmetrical to one another.

10. Connecting means (100) in accordance with any one of Claims 1 to 9, **characterized in that** at least one connecting element (120, 122) comprises a base body (124) which is substantially in the shape of a circular-cylindrical segment or a circular-cylindrical portion, and at least one holding projection (126) which is substantially in the shape of a circular arc and by means of which the at least one connecting element (120, 122) is securable in the component (102, 104).

## Revendications

1. Moyen de raccordement (100) pour le raccordement d'un premier composant (102) et d'un second composant (104), en particulier pour le raccordement de parties de meuble ou de machine, comprenant :
- un premier élément de raccordement (120) disposé dans l'état raccordé des composants au niveau du premier composant (102) et
- un second élément de raccordement (122) disposé dans l'état raccordé des composants au niveau du second composant (104), le second élément de raccordement (122) comprenant un élément de réception (168),
dans lequel au moins un des éléments de raccordement (120, 122) comprend une surface d'appui courbée qui est en forme d'arc de cercle dans une coupe longitudinale,
**caractérisé en ce**
**que** le premier élément de raccordement (120) comprend un élément de ressort (130) et au moins deux éléments de renforcement (148) réalisés en tant qu'éléments de ressort auxiliaires (140) pour le renforcement d'une force de ressort de l'élément de ressort (130), dans lequel au moins un élément de ressort auxiliaire (140) agit, pour le renforcement de la force de ressort de l'élément de ressort (130), directement sur l'élément de ressort (130) et dans lequel au moins un élément de ressort auxiliaire (140) agit, pour le renforcement de la force de ressort de l'élément de ressort (130), directement sur l'au moins un élément de ressort auxiliaire (140) qui agit directement sur l'élément de ressort (130), dans lequel, pour le raccordement du premier composant (102) et du second composant (104), l'élément de ressort (130) peut être mis en prise avec l'élément de réception (168), dans lequel le premier élément de raccordement (120) comprend un composant moulé par injection d'un seul tenant qui comprend l'élément de ressort (130), les éléments de renforcement (148) et un corps de base (124) du premier élément de raccordement (120), dans lequel les au moins deux éléments de ressort auxiliaires (140) présentent au moins approximativement une forme correspondant à l'élément de ressort (130).

2. Moyen de raccordement (100) selon la revendication 1, **caractérisé en ce que** l'élément de réception (168) comprend une saillie de réception (178) et/ou une cavité de réception.

3. Moyen de raccordement (100) selon l'une quelconque des revendications 1 ou 2, **caractérisé en ce que** l'élément de réception (168) comprend une section de serrage (184) le long de laquelle une section de prise (144) de l'élément de ressort (130) peut être déplacée, pour l'établissement du raccordement, entre le premier composant (102) et le second composant (104), dans lequel l'élément de ressort (130) est serré par celle-ci.

4. Moyen de raccordement (100) selon la revendication 3, **caractérisé en ce que** la section de serrage (184) présente une section transversale sensiblement parabolique.

5. Moyen de raccordement (100) selon l'une quelconque des revendications 1 à 4, **caractérisé en ce que** l'élément de réception (168) est réalisé au moins par section de manière élastique.

6. Moyen de raccordement (100) selon l'une quelconque des revendications 1 à 5, **caractérisé en ce**
**que** l'élément de réception (168) est raccordé à une extrémité (170) tournée vers le premier élément de raccordement (120) de l'élément de réception (168) à un corps de base (124) du second élément de raccordement (122) et
**qu'**au moins une extrémité (180) éloignée du premier élément de raccordement (120) de l'élément de réception (168) est réalisée de manière mobile.

7. Moyen de raccordement (100) selon l'une quelconque des revendications 1 à 6, **caractérisé en ce que** le premier élément de raccordement (120) comprend au moins deux éléments de ressort (130) qui entourent de part et d'autre l'élément de réception (168) à l'état raccordé.

8. Moyen de raccordement (100) selon l'une quelconque des revendications 1 à 7, **caractérisé en ce que** l'élément de réception (168) est réalisé de manière symétrique par rapport à un plan médian transversal (146) s'étendant perpendiculairement à un plan de raccordement (166) du moyen de raccordement (100) de l'élément de réception (168).

9. Moyen de raccordement (100) selon l'une quelconque des revendications 1 à 8, **caractérisé en ce que** le premier élément de raccordement (120) comprend au moins deux éléments de ressort (130) et au moins quatre éléments de renforcement (148), dans lequel les au moins deux éléments de ressort (130) et les au moins quatre éléments de renforcement (148) sont disposés, par rapport à un plan médian transversal (146), s'étendant perpendiculairement à un plan de raccordement (166) du moyen de raccordement (100), du premier élément de raccordement (120), de manière symétrique les uns aux autres au niveau du premier élément de raccordement (120) et/ou sont réalisés de manière symétrique les uns aux autres.

10. Moyen de raccordement (100) selon l'une quelconque des revendications 1 à 9, **caractérisé en ce qu'**au moins un élément de raccordement (120, 122) comprend un corps de base (124) sensiblement en forme de segment cylindrique et circulaire ou section cylindrique et circulaire et au moins une saillie de retenue (126) sensiblement en forme d'arc de cercle, au moyen de laquelle l'au moins un élément de raccordement (120, 122) peut être fixé dans le composant (102, 104).
